(19) Europäisches Patentamt
European Patent Office
Office européen des brevets

(11) **EP 1 978 264 A2**

(12) **EUROPÄISCHE PATENTANMELDUNG**

(43) Veröffentlichungstag:
**08.10.2008 Patentblatt 2008/41**

(51) Int Cl.:
***F16B 2/00*** *(2006.01)*

(21) Anmeldenummer: **08101641.2**

(22) Anmeldetag: **14.02.2008**

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(30) Priorität: **05.04.2007  DE 102007016643**

(71) Anmelder: **Geislinger GmbH**
**5300 Hallwang (AT)**

(72) Erfinder:
• **Geislinger, Matthias**
**5026, Salzburg (AT)**
• **Geislinger, Cornelius**
**5020, Salzburg (AT)**
• **Sigle, Christof**
**5300, Hallwang (AT)**

(74) Vertreter: **Beck & Rössig**
**European Patent Attorneys**
**Cuvilliésstrasse 14**
**81679 München (DE)**

(54) **Kraftschlüssige Spannverbindung und Verfahren zu deren Herstellung**

(57)    Eine kraftschlüssige Spannverbindung umfasst eine erste metallische Spannfläche (3), eine zweite metallische Spannfläche (4) und ein Spannorgan (5) zum Verspannen der Spannflächen (3, 4) gegeneinander. Die erste Spannfläche (3) bildet eine gehärtete Obcrflächcnfcinstruktur mit Mikroerhebungen und -vertiefungen aus. Dabei weist die zweite Spannfläche (4) eine geringere Härte als die erste Spannfläche (3) auf. Vorzugsweise wird die erste Spannfläche (3) vor dem Härten durch Sandstrahlen, Kugelstrahlen oder Prägen oberflächenbehandelt. Dies ermöglicht dauerhaft hohe Reibwerte zwischen den Spannflächen (3, 4). Weiterhin werden eine Flanschverbindung mit einer solchen Spannverbindung zur Übertragung hoher Drehmomente sowie ein Herstellungsverfahren beschrieben.

FIG. 2

**EP 1 978 264 A2**

**Beschreibung**

Die Erfindung bezieht sich auf eine kraftschlüssige Spannverbindung, umfassend eine erste metallische Spannfläche, eine zweite metallische Spannfläche und ein Spannorgan zum Verspannen der Spannflächen gegeneinander. Weiterhin bezieht sich die Erfindung auf ein entsprechendes Herstellungsverfahren.

Derartige Spannverbindungen, bei denen das Spannorgan als Schraube ausgebildet ist, sind aus dem Stand der Technik allgemein bekannt. Um eine Scherbeanspruchung der Schraube zu vermeiden, wird eine solche Spannverbindung in der Regel derart ausgelegt, dass die Spannflächen der zu verbindenden Bauteile durch Haftreibung aneinander fixiert werden.

Beim Anziehen einer Schraubverbindung mit einem vorgegebenen Anzugsmoment entsteht unterhalb des Schraubenkopfes eine Vorspannkraft, die wiederum eine Reibkraft zwischen den zu verbindenden Bauteilen erzeugt. Solange die zu übertragende Kraft zwischen den Bauteilen kleiner als die Reibkraft ist, bleiben diese fest miteinander verbunden. Wird die Reibkraft hingegen überschritten, kommt es zu einem Verrutschen der Bauteile gegeneinander.

Eine Auslegung einer Schraubverbindung erfolgt üblicherweise unter Berücksichtigung der folgenden Parameter:

$A_s$: Spannungsquerschnitt der Schraube
$\sigma_s$: Festigkeit des verwendeten Schraubenmaterials
$\eta$: Ausnutzungsgrad der Schraubenfestigkeit
$\mu$: Reibwert zwischen den einzelnen Bauteilen

Mit Hilfe dieser Parameter kann die maximal zu übertragende Last zwischen den einzelnen Bauteilen annähernd wie folgt berechnet werden:

$$F_{max} = \mu \cdot \eta \cdot A_S \cdot \sigma_S$$

Bei der Auslegung einer metallischen Schraubverbindung ist hierbei der Reibwert je nach Oberflächen- und Schmierzustand zwischen 0,10 und 0,18 anzusetzen. Durch verschiedene Zusatzmaßnahmen kann dieser Reibwert erhöht werden. So ist es beispielsweise möglich, die Spannflächen der miteinander zu verbindenden Bauteile durch Sandstrahlen zu bearbeiten oder mit reibungserhöhenden Schichten zu beschichten. Hierbei lassen sich Reibwerte bis zu 0,5 erzielen.

Diese Maßnahmen weisen jedoch den Nachteil auf, dass sich der Reibwert bei einem Lösen und erneuten Spannen der Spannverbindung, bei dynamischer Beanspruchung oder bei einem Verrutschen der Spannflächen gegeneinander verringert, da entweder die Oberflächenrauhigkeit abnimmt oder die Beschichtung abgelöst wird. Kann der ursprünglich vorgesehene Reibwert nicht aufrechterhalten werden, ist es unter Umständen erforderlich, die entsprechenden Bauteile vor einem erneuten Spannen nachzubearbeiten oder sogar auszutauschen, um ein gewünschtes Haftreibungsniveau mit ausreichender Sicherheit zu gewährleisten. Dies ist insbesondere bei hochbelasteten Spannverbindungen von Bedeutung.

Vor diesem Hintergrund liegt der Erfindung die Aufgabe zugrunde, eine Spannverbindung zu schaffen, welche einen dauerhaft hohen Reibwert zwischen den zu verbindenden Spannflächen ermöglicht.

Diese Aufgabe wird durch eine Spannverbindung gemäß Patentanspruch 1 gelöst. Die erfindungsgemäße Spannverbindung umfasst eine erste metallische Spannfläche, eine zweite metallische Spannfläche und ein Spannorgan zum Verspannen der Spannflächen gegeneinander. Sie zeichnet sich dadurch aus, dass die erste Spannfläche eine gehärtete Oberflächenfeinstruktur mit Mikroerhebungen und -vertiefungen ausbildet und die zweite Spannfläche eine geringere Härte als die erste Spannfläche aufweist.

Werden die Spannflächen mittels des Spannorgans gegeneinander verspannt, so prägen sich die Mikroerhebungen der ersten Spannfläche in die zweite Spannfläche ein, wodurch es zu einer sogenannten Mikroverzahnung kommt. Die an der ersten Spannfläche ausgebildete, gehärtete Oberflächenfeinstruktur bleibt auch bei einem mehrmaligen Lösen und Spannen der Spannverbindung erhalten, so dass es im Unterschied zum Stand der Technik nicht zu einem Abfall des Reibwerts kommt. Auf diese Weise lässt sich an einer lösbaren Spannverbindung ein hoher Reibwert im Bereich von 0,20 bis 0,5 dauerhaft aufrechterhalten.

Weitere, vorteilhafte Ausgestaltungen der Erfindung sind in den Patentansprüchen angegeben.

Für die zweite Spannfläche bestehen im Hinblick auf die Oberflächenrauhigkeit zwar keine besonderen Anforderungen. Vorzugsweise weist die zweite Spannfläche jedoch eine geringere Oberflächenrauhigkeit als die erste Spannfläche auf, um etwaige Setzeffekte möglichst gering zu halten. Die zweite Spannfläche kann beispielsweise durch ein spanendes Bearbeitungsverfahren hergestellt werden und prinzipiell die gleiche Oberflächenrauhigkeit wie die erste Spannfläche vor einer die Oberflächenrauhigkeit erhöhenden Nachbearbeitung aufweisen.

Zwar ist es prinzipiell möglich, an der ersten Spannfläche stärker ausgeprägte Mikroerhebungen und -vertiefungen und damit eine größere Oberflächenrauhigkeit bereits bei der Herstellung der ersten Spannfläche spanend zu erzeugen. Bevorzugt werden diese Mikroerhebungen und -vertiefungen jedoch durch eine separate rauhigkeitserhöhende Oberflächenbehandlung erhalten.

Gemäß einer bevorzugten Ausgestaltung der Erfindung sind die Mikroerhebungen und -vertiefungen durch Sandstrahlen, Kugelstrahlen oder Prägen, wie beispielsweise Rändeln, hergestellt.

Die an der ersten Spannfläche realisierten gemittelten Rauhtiefenwerte $R_z$ gemäß DIN 4768 liegen vorzugsweise im Bereich von 10 bis 100 μm.

Dabei kann grundsätzlich die gesamte erste Spannfläche mit einer einheitlichen Oberflächenstruktur ausgebildet werden. Es ist jedoch auch möglich, lediglich Abschnitte der ersten Spannfläche mit einer erhöhten Oberflächenrauhigkeit auszubilden. Gemäß einer vorteilhaften Ausgestaltung der Erfindung können Mikroerhebungen und -vertiefungen aufweisende Abschnitte mit einer größeren Oberflächenrauhigkeit mit Abschnitten mit einer kleineren Oberflächenrauhigkeit abwechseln.

Hierbei ist es insbesondere möglich, lediglich die Abschnitte mit eine größeren Rauhigkeit oberflächenzubehandeln, während die verbleibenden Abschnitte keiner zusätzlichen Oberflächenbehandlung unterzogen werden. Zweckmäßigerweise wird man jedoch die gesamte erste Spannfläche härten.

Die vorstehend erläuterte kraftschlüssige Spannverbindung kann überall dort eingesetzt werden, wo über eine kraftschlüssige Verbindung hohe Querkräfte bzw. Drehmomente übertragen werden müssen.

Gemäß einer vorteilhaften Ausgestaltung der Erfindung kommt diese an einer Flanschverbindung zum Einsatz, welche einen ersten Flansch, einen zweiten Flansch und eine oder mehrere Spannhülsen sowie diesen zugeordnete Spannorgane zur Festlegung des zweiten Flanschs an dem ersten Flansch aufweist. Hierbei sind die Spannhülsen mit Stirnseiten kraftschlüssig gegen den ersten Flansch verspannbar und stehen mit dem zweiten Flansch über Lochleibung in Eingriff. Die Übertragung einer Querkraft bzw. eines Drehmoments von dem ersten Flansch zu dem zweiten Flansch erfolgt somit nicht direkt, sondern unter Zwischenschaltung der Spannhülsen. Vorzugsweise befindet sich in diesem Fall die erste Spannfläche fertigungstechnisch vorteilhaft jeweils an der Stirnseite der Spannhülsen während die zweite Spannfläche an dem ersten Flansch ausgebildet ist.

Es ist jedoch auch denkbar, den ersten Flansch mit der härteren, ersten Spannfläche und die Spannhülsen mit der weicheren, zweiten Spannfläche auszubilden.

Da die Spannhülsen unmittelbar gegen den ersten Flansch verspannt werden, kann der zweite Flansch mit geringen Axialkräften oder axialkraftfrei zwischen dem ersten Flansch und den Spannhülsen angeordnet werden. Vorzugsweise wird der zweite Flansch mit den Spannhülsen verklebt.

Zur Festlegung der Spannhülsen an dem zweiten Flansch können diese jeweils mit einem verjüngten Absatz ausgebildet werden, der sich in eine entsprechende Lochöffnung des zweiten Flansches erstreckt. Vorzugsweise ist hierbei die Axiallänge des Absatzes gleich der Lochtiefe der Lochöffnung oder geringfügig größer. Ein etwaiger Axialausgleich zu dem ersten Flansch erfolgt durch Klebematerial. Diese Konfiguration vermeidet hohe Druckvorspannkräfte an dem zweiten Flansch, so dass dieser aus einem nicht-metallischen Werkstoff, insbesondere einem Faserverbundwerkstoff hergestellt werden kann.

Die oben genannte Aufgabe wird ferner durch ein Herstellungsverfahren gemäß Patentanspruch 14 gelöst, das sich dadurch auszeichnet, dass zunächst die erste Spannfläche gefertigt wird, die erste Spannfläche anschließend einer die Oberflächenrauhigkeit erhöhenden, mechanischen Oberflächenbehandlung unterzogen, um an dieser Mikroerhebungen und -vertiefungen auszubilden, und hernach die erzeugten Mikroerhebungen und -vertiefungen durch Härten fixiert werden, wobei die erste Spannfläche eine größere Oberflächenhärte als die zweite Spannfläche erhält.

Vorzugsweise wird die erste Spannfläche vor dem Härten durch Sandstrahlen, Kugelstrahlen oder Prägen oberflächenbehandelt. In einer vorteilhaften Ausgestaltung des Verfahrens wird die erste Spannfläche vor der Oberfächenbehandlung umformtechnisch oder spanend hergestellt.

Nachfolgend wird die Erfindung anhand von in der Zeichnung dargestellten Ausführungsbeispielen näher erläutert. Die Zeichnung zeigt in:

Figur 1      eine Schnittansicht eines ersten Ausführungsbeispiels einer kraftschlüssigen Spannverbindung nach der Erfindung,

Figur 2      eine Schnittansicht eines zweiten Ausführungsbeispiels einer kraftschlüssigen Spannverbindung nach der Erfindung, und in

Figur 3      eine Seitenansicht der Spannhülse aus Figur 2.

Das erste Ausführungsbeispiel zeigt eine kraftschlüssige Spannverbindung zur Übertragung einer Querkraft $F_Q$ zwischen zwei Flanschen 1 und 2. Die beiden Flansche 1 und 2 liegen mit jeweils metallischen Spannflächen 3 und 4 aneinander an und sind durch ein Spannorgan 5, das hier als Schraube 6 mit einer Mutter 7 ausgebildet ist, gegeneinander verspannt.

Die Vorspannkraft $F_V$ des Spannorgans 5 ist so gewählt, dass unter Berücksichtigung von Setzeffekten zwischen den Spannflächen 3 und 4 eine Normalkraft $F_N$ erzeugt wird, welche in Bezug auf die zu übertragende Querkraft $F_Q$ folgende Bedingung erfüllt:

$$F_N \cdot \mu > \cdot F_Q$$

Je höher der Reibwert μ ist, desto größere Querkräfte $F_Q$ können übertragen werden. Erfindungsgemäß ist daher vorgesehen, eine der Spannflächen 3 bzw. 4 mit einer gegenüber herkömmlichen Spannflächenpaarungen erhöhten Oberflächenrauhigkeit zu versehen, so dass sich eine Oberflächenfeinstruktur mit Mikroerhebungen und -vertiefungen ergibt. Diese Struktur mit erhöhter Rauhigkeit wird durch Oberflächenhärten fixiert, so dass diese auch bei einem häufigen Lösen und Spannen der Spannverbindung und bei dynamischer Beanspruchung aufrechterhalten bleibt.

Die gegenüberliegende Spannfläche 4 bzw. 3 weist demgegenüber eine geringere Härte auf, so dass im verspannten Zustand die Mikroerhebungen der ersten Spannfläche 3 mit der zweiten Spannfläche 4 eine Mikroverzahnung bilden.

Die erste Spannfläche 3 wie auch die zweite Spannfläche 4 werden zunächst in herkömmlicher Weise, beispielsweise spanend oder umformtechnisch hergestellt. Während die erste Spannfläche 3 anschließend einer die Oberflächenrauhigkeit erhöhenden Oberflächenbehandlung und einem nachfolgenden Härten unterzogen wird, sind an der zweiten Spannfläche 4 keine weiteren Maßnahmen erforderlich. Jede Spannfläche 3 bzw. 4 besteht aus einem einheitlichen, homogenen Material.

Ergibt sich bei herkömmlich hergestellten Spannflächen ein Reibwert im Bereich von 0,10 bis 0,18, wird durch die zusätzliche Oberflächenbehandlung der ersten Spannfläche 3 ein dauerhaft erhöhter Reibwert im Bereich von 0,20 bis 0,5 erhalten.

Zur Oberflächenbehandlung der ersten Spannfläche 3 eignen sich prinzipiell alle Verfahren, mit denen auf mechanischem Wege eine definierte Oberflächenrauhigkeit hergestellt werden kann. Geeignete Verfahren sind insbesondere solche Verfahren, bei denen Mikroerhebungen und -vertiefungen vorwiegend umformend erzeugt werden, wie beispielsweise Sandstrahlen, Kugelstrahlen und Prägeverfahren einschließlich Rändeln.

Vorzugsweise liegt die gemittelte Rauhtiefe $R_Z$ an der ersten Spannfläche 3 im Bereich von 10 bis 100 $\mu$m, weiter bevorzugt im Bereich von 20 bis 63 $\mu$m.

Die zweite Spannfläche 4 weist bei dem hier erläuterten Ausführungsbeispiel eine geringere Rauhtiefe $R_Z$ als die erste Spannfläche 3 auf. Geeignete Werte liegen im Bereich von 2,5 bis 100 $\mu$m, bevorzugt im Bereich von 2,5 bis 40 $\mu$m Etwaige Glättungseffekte auf Seiten der zweiten Spannfläche 4 durch wiederholtes Spannen und Lösen sind unproblematisch, da sich die Mikroverzahnung aufgrund der geringeren Härte der zweiten Spannfläche 4 mit jedem Spannen erneut bildet.

In Abwandlung des dargestellten Ausführungsbeispiels ist es möglich, eine definiert erhöhte Oberflächenrauhigkeit an der ersten Spannfläche 3 bereits während der Herstellung derselben, beispielsweise spanend, zu erzeugen und anschließend durch Härten zu fixieren.

Weiterhin ist es möglich, lediglich Teilabschnitte der ersten Spannfläche 3 mit einer größeren Oberflächenrauhigkeit zu versehen und hierzu entsprechend zu behandeln.

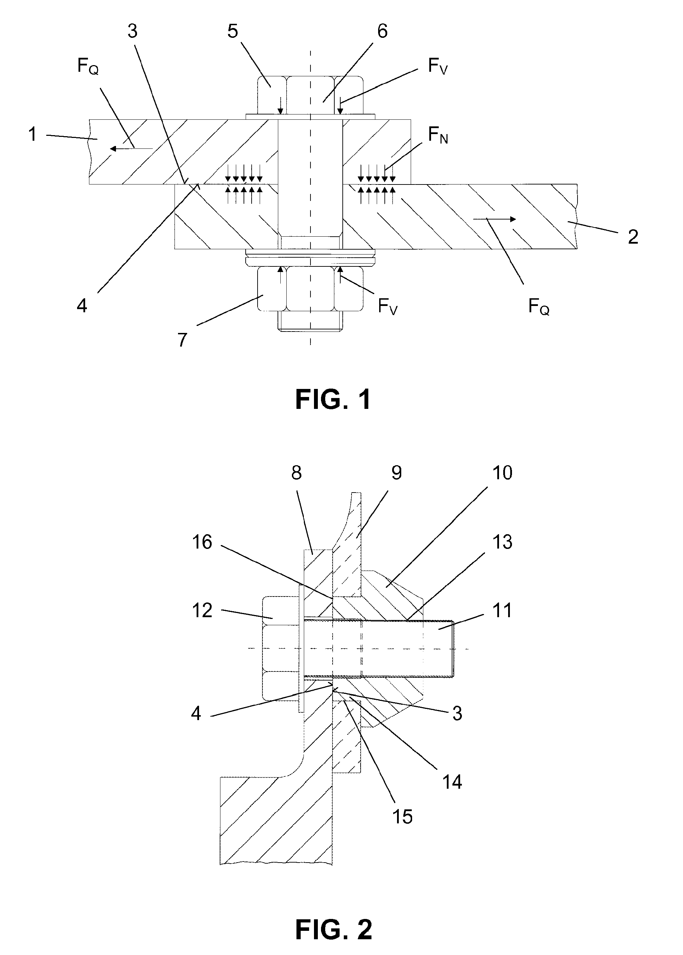

Figur 2 zeigt eine Flanschverbindung, bei der zur Übertragung hoher Drehmomente eine kraftschlüssige Spannverbindung der vorstehend erläuterten Art zum Einsatz kommt.

Die Flanschverbindung umfasst einen ersten Flansch 8 aus einem metallischen Werkstoff, vorzugsweise Stahl, sowie einen zweiten Flansch 9, der hier beispielhaft aus einem Faserverbundwerkstoff besteht.

Weiterhin umfasst die Flanschverbindung mehrere Spannhülsen 10 aus einem härtbaren Stahl sowie diesen zugeordnete Spannorgane 11 in Form von Gewindebolzen. Die Spannorgane 11 sind durch den ersten und zweiten Flansch 8 und 9 hindurchgeführt und stützen sich jeweils mit einem Kopf 12 an dem ersten Flansch 8 ab. Jedes Spannorgan 11 ist ferner mit einer Spannhülse 10 verschraubt, die hierzu ein Innengewinde 13 ausbildet.

Die Spannhülsen 10 weisen jeweils einen verjüngten Absatz 14 auf, der sich durch eine entsprechende Lochöffnung 15 des zweiten Flansches 9 erstreckt, um eine Drehmomentübertragung durch Lochleibung zu ermöglichen. Jede der Spannhülsen 10 ist an der Stirnseite 16 des Absatzes 14 im Einbauzustand gegen den ersten Flansch 8 verspannt.

Zur kraftschlüssigen Übertragung hoher Drehmomente zwischen dem ersten Flansch 8 und den Spannhülsen 10 ist die im Zusammenhang mit dem ersten Ausführungsbeispiel erläuterte erste Spannfläche 3 an den Spannhülsen 10 vorgesehen, während sich die zweite Spannfläche 4 an dem ersten Flansch 8 befindet.

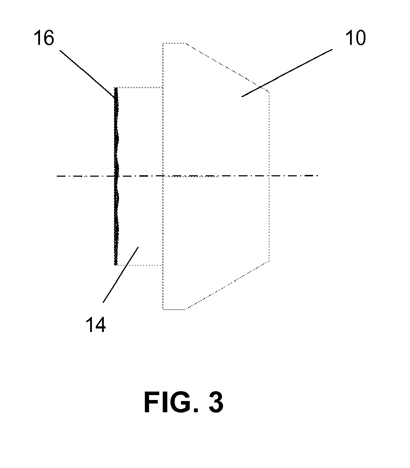

Wie insbesondere in Figur 3 zu erkennen ist, befindet sich die gehärtete Oberflächenfeinstruktur mit erhöhter Oberflächenrauhigkeit an der Stirnseite 16 der jeweiligen Spannhülse 10, so dass deren Mikroerhebungen und -vertiefungen mit dem ersten Flansch 8 in Eingriff gelangen. Wie Figur 3 weiter zeigt, kann eine entsprechende Oberflächenbehandlung der Spannhülsen 10 auf die Stirnseiten 16 beschränkt werden, woraus eine besonders wirtschaftliche Anwendung des erfindungsgemäßen Verfahrens resultiert. Vorzugsweise erfolgt insbesondere auch das Härten lediglich im Bereich der oberflächenbehandelten Stirnseite 16.

Die Spannhülsen 10 können zusätzlich mit dem zweiten Flansch 9 verklebt werden. Die Axiallänge der Absätze 14 entspricht mindestens der Dicke des zweiten Flansches 9. Ein etwaiges Axialspiel des zweiten Flansches 9 zu dem ersten Flansch 8 wird durch aushärtendes Klebermaterial ausgeglichen.

Durch Einsatz des oben erläuterten Verfahrens ist es möglich, den Reibwert einer solchen Flanschverbindung, der bei herkömmlich hergestellten Spannflächen bei ca. 0,15 liegen würde, durch Aufrauhen mittels Kugel- bzw. Sandstrahlen und anschließendes Oberflächenhärten dauerhaft auf über 0,20 zu erhöhen und somit das maximal übertragbare Drehmoment zu steigern. Insbesondere lassen sich hier Werte im Bereich von 0,28 bis 0,35 erzielen.

Die Erfindung wurde vorstehend anhand von Ausführungsbeispielen näher erläutert. Sie ist jedoch nicht auf diese Ausführungsbeispiele beschränkt, sondern umfasst alle durch die Patentansprüche definierten Ausgestaltungen.

**Patentansprüche**

1. Kraftschlüssige Spannverbindung, umfassend:

   - eine erste metallische Spannfläche (3),
   - eine zweite metallische Spannfläche (4), und
   - ein Spannorgan (5) zum Verspannen der Spannflächen (3, 4) gegeneinander,

   **dadurch gekennzeichnet, dass**
   die erste Spannfläche (3) eine gehärtete Oberflächenfeinstruktur mit Mikroerhebungen und -vertiefungen ausbildet, und
   die zweite Spannfläche (4) eine geringere Härte als die erste Spannfläche (3) aufweist.

2. Kraftschlüssige Spannverbindung nach Anspruch 1, **dadurch gekennzeichnet, dass** die zweite Spannfläche (4) eine geringere Oberflächenrauhigkeit als die erste Spannfläche (3) aufweist.

3. Kraftschlüssige Spannverbindung nach Anspruch 1 oder 2, **dadurch gekennzeichnet, dass** die erste Spannfläche (3) eine gemittelte Rauhtiefe $R_Z$ im Bereich von 10 bis 100 $\mu$m aufweist.

4. Kraftschlüssige Spannverbindung nach einem der Ansprüche 1 bis 3, **dadurch gekennzeichnet, dass** die Mikroerhebungen und Vertiefungen durch eine rauhigkeitserhöhende Oberflächenbehandlung insbesondere durch Sandstrahlen, Kugelstrahlen oder Prägen erhalten sind.

5. Kraftschlüssige Spannverbindung nach einem der Ansprüche 1 bis 4, **dadurch gekennzeichnet, dass** die Reibflächenpaarung aus erster und zweiter Spannfläche (3, 4) einen Reibwert im Bereich von 0,20 bis 0,5 aufweist.

6. Kraftschlüssige Spannverbindung nach einem der Ansprüche 1 bis 5, **dadurch gekennzeichnet, dass** die erste Spannfläche (3) Mikroerhebungen und -vertiefungen aufweisende Abschnitte mit einer größeren Oberflächenrauhigkeit sowie weitere Abschnitte mit einer kleineren Oberflächenrauhigkeit aufweist.

7. Kraftschlüssige Spannverbindung nach einem der Ansprüche 1 bis 6, **dadurch gekennzeichnet, dass** die erste Spannfläche (3) oberflächenbehandelte und nichtoberflächenbehandelte Abschnitte aufweist, wobei die oberflächenbehandelten Abschnitte eine größere Oberflächenrauhigkeit als die nichtoberflächenbehandelten Abschnitte aufweisen.

8. Kraftschlüssige Spannverbindung nach einem der Ansprüche 1 bis 6, **dadurch gekennzeichnet, dass** die erste Spannfläche (3) vollständig oberflächenbehandelt ist.

9. Kraftschlüssige Spannverbindung nach einem der Ansprüche 1 bis 8, **dadurch gekennzeichnet, dass** die Spannverbindung lösbar ist.

10. Flanschverbindung mit einer kraftschlüssigen Spannverbindung nach einem der vorgenannten Ansprüche 1 bis 9, umfassend:

    - einen ersten Flansch (8),
    - einen zweiten Flansch (9),
    - eine oder mehrere Spannhülsen (10) sowie diesen zugeordnete Spannorgane (11) zur Festlegung des zweiten Flanschs (9) an dem ersten Flansch (8),

    wobei die Spannhülsen (10) mit Stirnseiten (16) kraftschlüssig gegen den ersten Flansch (8) verspannbar sind und mit dem zweiten Flansch (9) über Lochleibung in Eingriff stehen, und
    wobei die erste Spannfläche (3) jeweils an der Stirnseite (16) der Spannhülsen (10) und die zweite Spannfläche (4) an dem ersten Flansch (8) ausgebildet sind.

11. Flanschverbindung nach Anspruch 10, **dadurch gekennzeichnet, dass** der zweite Flansch (9) mit den Spannhülsen (10) verklebt ist.

12. Flanschverbindung nach Anspruch 10 oder 11, **dadurch gekennzeichnet, dass** die Spannhülsen (10) jeweils einen verjüngten Absatz (14) aufweisen, der sich in eine entsprechende Lochöffnung (15) des zweiten Flansches (9) erstreckt, wobei die Axiallänge des Absatzes (14) gleich der Lochtiefe der Lochöffnung (15) oder geringfügig größer ist und ein etwaiger Axialausgleich zu dem ersten Flansch (8) durch Klebematerial erfolgt.

13. Verfahren zur Herstellung einer kraftschlüssigen Spannverbindung mit einer ersten metallischen Spannfläche (3), einer zweiten metallischen Spannfläche (4) und einem Spannorgan (5; 11) zum Verspannen der Spannflächen gegeneinander, bei dem zunächst die erste Spannfläche (3) gefertigt wird, **dadurch gekennzeichnet, dass** die erste Spannfläche (3) anschließend einer die Oberflächenrauhigkeit erhöhenden, mechanischen Oberflächenbehandlung unterzogen wird, um an dieser Mikroerhebungen und Vertiefungen auszubilden, und hernach die erzeugten Mikroerhebungen und -vertiefungen durch Härten fixiert werden, wobei die erste Spannfläche (3) eine größere Oberflächenhärte als die zweite Spannfläche (4) erhält.

14. Verfahren nach Anspruch 13, **dadurch gekenn-**

**zeichnet, dass** die erste Spannfläche (3) vor dem Härten durch Sandstrahlen, Kugelstrahlen oder Prägen oberflächenbehandelt wird und/oder dass die erste Spannfläche (3) vor der Oberfächenbehandlung umformtechnisch oder spanend hergestellt wird.

$F_Q$

3    5    6

$F_V$

$F_N$

1

2

4

7

$F_V$

$F_Q$

## FIG. 1

8    9    10

16    13

12    11

4    3

14

15

## FIG. 2

**FIG. 3**